# FASCICULE DE BREVET EUROPEEN

(11) **EP 0 958 548 B1**
(45) Date de publication et mention de la délivrance du brevet: **03.09.2003**
(21) Numéro de dépôt: 98958308.3
(22) Date de dépôt: 02.12.1998
(51) Int. Cl.: G06T 7/60, G06T 17/20

(54) **PROCEDE DE SEGMENTATION SEMI-AUTOMATIQUE POUR L'ESTIMATION DE VOLUMES TRIDIMENSIONNELS**
SEMIAUTOMATISCHES SEGMENTATIONSVERFAHREN ZUM SCHÄTZEN VON DREIDIMENSIONALEM VOLUMEN
SEMIAUTOMATIC SEGMENTATION METHOD FOR ESTIMATING THREE-DIMENSIONAL VOLUMES

(30) Priorité: 10.12.1997 FR 9715639
(43) Date de publication de la demande: 24.11.1999
(73) Titulaire: GE MEDICAL SYSTEMS SA, 78533 Buc Cedex (FR)
(72) Inventeur: KNOPLIOCH, Jérôme, F-92200 Neuilly-sur-Seine (FR); STEFANI, Eric, F-92100 Boulogne Billancourt (FR)
(74) Mandataire: Goode, Ian Roy
(86) Numéro de dépôt international: FR9802599
(87) Numéro de publication internationale: WO99030281

(56) Documents cités:
- US-A- 5 307 292
- US-A- 5 435 310

## Description

La présente invention concerne le domaine de l'estimation du volume d'un objet tridimensionnel, notamment en imagerie médicale.

Dans certaines applications d'imagerie médicale, on a besoin de connaître avec précision le volume d'objets tridimensionnels, par exemple un organe ou une partie d'organe du corps humain.

On connaît de tels procédés permettant d'approcher le volume d'un objet par la connaissance du contour de cet objet selon différentes coupes, le tracé entre les coupes étant ensuite modélisé par une pente continue. On modélise ainsi l'objet tridimensionnel par une pluralité de volumes tronconiques de faible épaisseur. Toutefois, ce procédé oblige un opérateur à tracer le contour de l'objet, ce qui demande un travail minutieux et lent.

La présente invention cherche à résoudre les problèmes du procédé ci-dessus, en proposant un procédé simple, facile à utiliser et permettant d'obtenir la précision souhaitée en un temps bref.

Le procédé, selon l'invention, est destiné à l'estimation du volume d'un objet tridimensionnel en imagerie médicale, un contour de l'objet étant connu au moyen d'une pluralité de clichés pris en coupe.

Le procédé comprend les étapes suivantes :
on définit un nombre donné de points de base constituant une première forme tridimensionnelle définie par des facettes dont les sommets sont les points de base,
chaque facette de la première forme étant définie par trois segments et chaque segment étant commun à deux facettes adjacentes, on divise les segments en créant des points de deuxième rang adaptés au contour de l'objet de façon à constituer une deuxième forme tridimensionnelle plus proche du contour de l'objet que la première forme, la création d'un point de deuxième rang entraînant la création de deux nouvelles facettes et de trois nouveaux segments,
   - chaque segment est itérativement divisé en sous-segments ajustés en définissant des points de troisième rang adaptés au contour de l'objet de façon à constituer une troisième forme tridimensionnelle plus proche du contour de l'objet que la deuxième forme, la création d'un point de troisième rang entraînant la création de deux nouvelles facettes et de trois nouveaux segments,
   - puis le volume de la troisième forme tridimensionnelle est calculé.

On n'a ainsi qu'à définir des points et non pas un contour, ce qui facilite le travail.

Dans un mode de réalisation de l'invention, les clichés sont pris selon des coupes parallèles.

Dans un autre mode de réalisation de l'invention,une pluralité de clichés est traitée pour fournir une description du volume tridimensionnel.

Avantageusement, chaque segment est divisé en deux.

Dans un mode de réalisation de l'invention, la position de chaque deuxième point est proposée en fonction de la position des deux premiers points adjacents. Chaque deuxième point peut ainsi être proposé en fonction de l'orientation des normales aux deux premiers points adjacents.

Dans un mode de réalisation de l'invention, les segments sont divisés en sous-segments jusqu'à ce que le changement de volume résultant d'une division donnée soit négligeable. On peut ainsi choisir un changement de volume seuil en dessous duquel la division itérative en sous-segments est arrêtée. Ce seuil de changement de volume correspond à la précision souhaitée du procédé.

Dans un mode de réalisation de l'invention, on définit six premiers points de base qu'on dispose sur le dessus et sur le dessous, sur l'avant et sur l'arrière, et sur chaque bord latéral de l'objet.

Un calcul de répartition de la densité de l'objet dans l'espace peut être effectué postérieurement au calcul du volume estimé de l'objet.

On peut modifier manuellement tout point des formes tridimensionnelles, par exemple pour l'adapter à une irrégularité du relief de l'objet tel qu'un creux ou une bosse. Une pondération différente est accordée aux points afin d'approcher au plus près le contour réel de l'objet. Une modification d'un premier point de base entraînera une modification correspondante de l'ensemble des points voisins. Au contraire, une modification d'un troisième point de la troisième forme n'entraînera pas de modification des premier et deuxième points adjacents et pourra modifier légèrement la position des troisièmes points adjacents. De façon très souple, on peut ainsi procéder à des améliorations des différentes formes aboutissant à les rendre plus proches du contour réel de l'objet tridimensionnel.

Également, pour conserver une grande souplesse d'utilisation, tout point, y compris de troisième rang, peut être défini manuellement.

La présente invention sera mieux comprise et d'autres avantages apparaîtront à la description détaillée d'un mode de réalisation pris à titre nullement limitatif et illustré par les dessins annexés, sur lesquels :
la figure 1 est une vue en perspective d'une forme finale selon l'invention;
les figures 2 et 3 sont des vues schématiques en deux dimensions du procédé selon l'invention; et
les figures 4 et 5 sont des vues schématiques en trois dimensions du procédé selon l'invention.

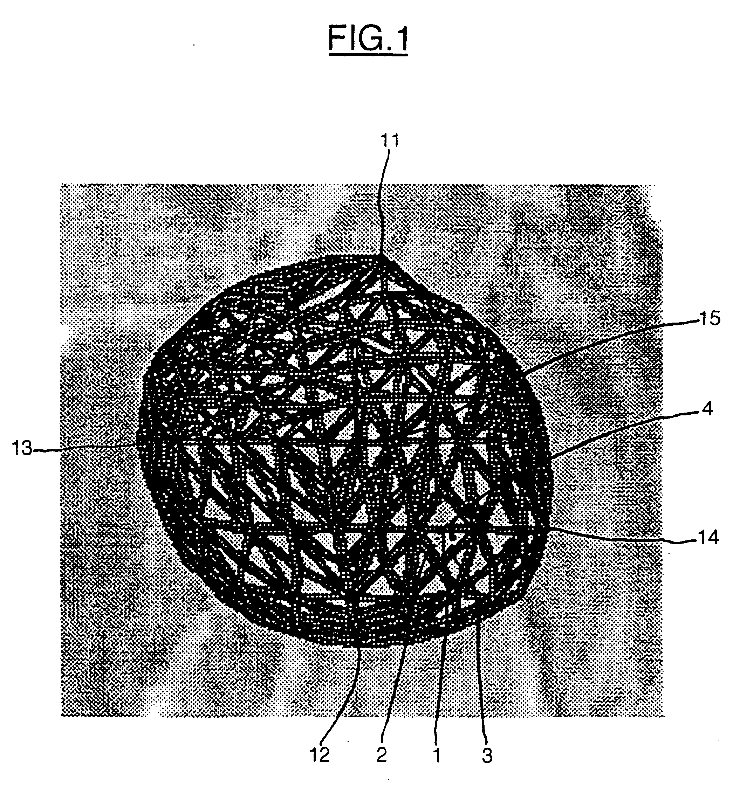

Comme on peut le voir sur la figure 1, une forme définitive approchant un objet tridimensionnel est constituée par une pluralité de facettes définies par trois segments, par exemple les segments 1 à 3 définissant une surface triangulaire plane 4. Le volume de l'objet tridimensionnel, non représenté, est ainsi approché au moyen de surfaces triangulaires dont les coordonnées des points sommet sont connues. Le calcul du volume de la forme peut ainsi être effectué.

Un opérateur commence par définir six points de l'objet, un point supérieur 11, un point inférieur 12, un point latéral gauche 13, un point latéral droit 14, un point avant 15 et un point arrière non visible sur la figure 1. Cette première forme définit ainsi grossièrement l'objet tridimensionnel, le positionnement de ces six points de base doit être effectué de façon précise car de leur définition dépend celle des futurs points adjacents. Pour obtenir une définition satisfaisante, il peut être nécessaire de vérifier leur positionnement sur différentes coupes de l'objet.

Après avoir défini les six premiers points, une vue oblique est ajoutée aux vues existantes, permettant par orientation et centrage de définir des points supplémentaires.

On peut alors définir les points supplémentaires à l'intersection de la normale à l'un des segments du volume de base, la normale étant calculée à partir des facettes et des points formant ce segment, et du bord de l'objet tridimensionnel étudié. Un certain nombre de deuxièmes points constituant une deuxième forme sont définis de façon manuelle ou automatique. Lorsque le changement de volume résultant de la définition de deuxièmes points devient inférieur à un seuil, on peut alors poursuivre la définition de points de façon automatique en procédant à la segmentation des facettes existantes jusqu'à ce qu'une correspondance suffisante avec l'objet tridimensionnel étudié soit obtenue, en constituant ainsi une troisième forme. On peut néanmoins poursuivre la définition de points de façon manuelle.

Lorsque le volume final est défini, on peut modifier des points dont la définition ne correspond pas de façon satisfaisante à une irrégularité de l'objet tridimensionnel étudié, notamment un creux ou une protubérance. On déplace alors le point selon la normale à la facette dont fait partie le point, la normale étant calculée à partir des facettes.

Les points adjacents aux points modifiés seront également modifiés pour maintenir la régularité du volume défini en tenant compte de l'appartenance dudit point à la première, la deuxième ou la troisième forme. Le déplacement d'un point de la première forme entraîne un déplacement correspondant de tous les points adjacents. Le déplacement d'un point de la troisième forme n'entraîne pas de déplacement des points adjacents des premières et deuxièmes formes.

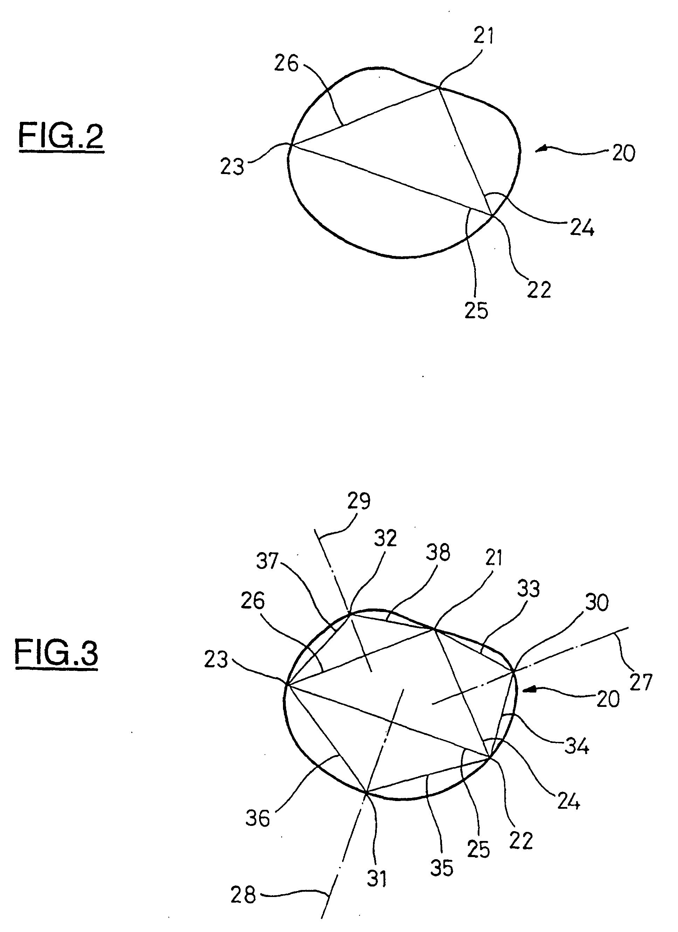

Les figures 2 et 3 montrent de façon schématique, en deux dimensions, le processus de définition des points. A partir d'un contour 20, des premiers points de base 21 à 23 sont définis et permettent de définir grossièrement ledit contour 20. Les segments de droite 24 à 26 reliant les premiers points de base 21 à 23 sont ensuite définis. Les normales 27 à 29 à ces segments 24 à 26 sont ensuite calculées. Puis on peut définir des deuxièmes points 30 à 32 approchant de façon plus précise le contour 20 en se déplaçant le long des normales 27 à 29. Puis on définit les segments 33 à 38 reliant les points 21 à 23 et 30 à 32, ce qui permet de reproduire les étapes précédentes, de façon manuelle, semi-automatique ou automatique jusqu'à ce que la précision souhaitée soit obtenue.

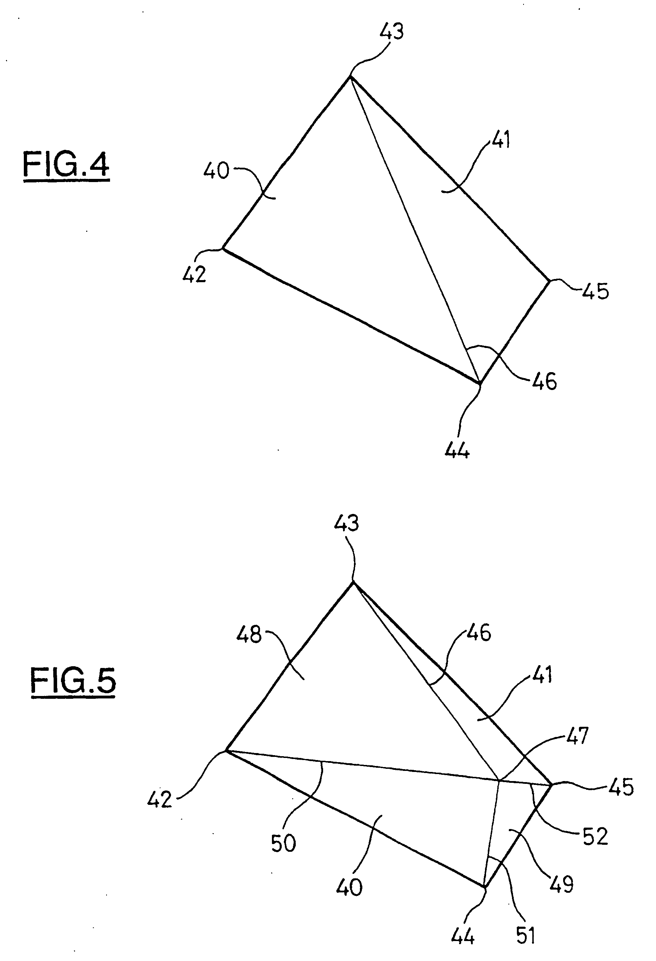

Les figures 4 et 5 montrent de façon schématique, en trois dimensions, le processus de définition des points. Deux facettes 40 et 41 appartenant à un contour sont représentées. La facette 40 est limitée par les points de base 42, 43 et 44. La facette 41 est limitée par les points de base 43, 44 et 45. Les points de base 43 et 44 sont donc communs aux facettes 40 et 41 et définissent un segment 46. On définit en suite un point de second ordre 47 ce qui entraîne la création des facettes supplémentaires 48 et 49 et des segments supplémentaires 50 à 52.

Grâce à l'invention, on dispose d'un procédé d'estimation du volume d'un objet tridimensionnel adapté à l'imagerie radiologique, d'usage facile car on a seulement un faible nombre de points à définir sur le bord de l'objet tridimensionnel, aisé à contrôler, ce qui garantit d'une bonne approximation du contour, rapide, car la phase de définition automatique peut être effectuée en quelques secondes et facilement reproductible dans la mesure où il repose sur la définition d'un faible nombre de points sur le contour de l'objet.

## Revendications

1. Procédé d'estimation et de segmentation du volume d'un objet tridimensionnel en imagerie médicale, un contour dudit objet étant connu au moyen d'une pluralité de clichés pris en coupe, **caractérisé par** les étapes suivantes
- on définit un nombre donné de points de base constituant une première forme tridimensionnelle définie par des facettes dont les sommets sont les points de base,
- chaque facette de la première forme étant définie par trois segments et chaque segment étant commun à deux facettes adjacentes, on divise les segments en créant des points de deuxième rang adaptés au contour de l'objet de façon à constituer une deuxième forme tridimensionnelle plus proche du contour de l'objet que la première forme, la création d'un point de deuxième rang entraînant la création de deux nouvelles facettes et de trois nouveaux segments,
- chaque segment est itérativement divisé en sous-segments ajustés en définissant des points de troisième rang adaptés au contour de l'objet de façon à constituer une troisième forme tridimensionnelle plus proche du contour de l'objet que la deuxième forme, la création d'un point de troisième rang entraînant la création de deux nouvelles facettes et de trois nouveaux segments,
- puis le volume de la troisième forme tridimensionnelle est calculé.

2. Procédé selon la revendication 1, **caractérisé par le fait que** les clichés sont pris selon des coupes parallèles.

3. Procédé selon la revendication 1, **caractérisé par le fait qu'**une pluralité de clichés est traitée pour fournir une description du volume tridimensionnel.

4. Procédé selon l'une quelconque des revendications précédentes, **caractérisé par le fait que** chaque segment est divisé en deux.

5. Procédé selon l'une quelconque des revendications précédentes, **caractérisé par le fait que** la position de chaque deuxième point est proposée à l'opérateur en fonction de la position des deux premiers points adjacents .

6. Procédé selon la revendication 5, **caractérisé par le fait que** la position de chaque deuxième point est proposée en fonction de l'orientation des normales aux deux premiers points adjacents.

7. Procédé selon l'une quelconque des revendications précédentes, **caractérisé par le fait que** les segments sont divisés en sous-segments jusqu'à ce que le changement de volume résultant d'une division donnée soit négligeable.

8. Procédé selon l'une quelconque des revendications précédentes, **caractérisé par le fait qu'**on définit six premiers points de base.

9. Procédé selon l'une quelconque des revendications précédentes, **caractérisé par le fait qu'**un calcul de répartition de la densité de l'objet dans l'espace est effectué.

10. Procédé selon l'une quelconque des revendications précédentes, **caractérisé par le fait qu'**on peut modifier tout point des formes tridimensionnelles.

11. Procédé selon l'une quelconque des revendications précédentes, **caractérisé par le fait que** les points sont définis de façon manuelle.

## Patentansprüche

1. Verfahren zur Bestimmung und Segmentierung des Volumens eines dreidimensionalen Objekts in der medizinischen Bildgebung, wobei eine Kontur des Objekts mittels einer Vielzahl von Schnittaufnahmen bekannt ist, **gekennzeichnet durch** die folgenden Schritte:
- man definiert eine gegebene Zahl von Basispunkten, die eine erste dreidimensionale Form bilden, welche **durch** Flächenelemente definiert ist, deren Spitzen die Basispunkte sind,
- jedes Flächenelement der ersten Form ist **durch** drei Segmente definiert und jedes Segment ist zwei angrenzenden Flächenelementen gemeinsam, man teilt die Segmente **durch** Erzeugen von Punkte zweiten Rangs, die der Kontur des Objekts angepasst sind, derart dass sie eine zweite dreidimensionale Form bilden, die der Kontur des Objekts näher ist als die erste Form, wobei die Erzeugung eines Punktes zweiten Rangs die Erzeugung von zwei neuen Flächenelementen und drei neuen Segmenten mit sich bringt,
- jedes Segment wird iterativ in passende Untersegmente unterteilt, indem Punkte dritten Rangs definiert werden, die der Kontur des Objekts angepasst sind, derart, dass sie eine dritte dreidimensionale Form bilden, die der Kontur des Objekts näher ist als die zweite Form, wobei die Erzeugung eines Punktes dritten Rangs die Erzeugung von zwei neuen Flächenelementen und drei neuen Segmenten mit sich bringt,
- dann wird das Volumen der dritten dreidimensionalen Form berechnet.

2. Verfahren nach Anspruch 1, **dadurch gekennzeichnet, dass** die Aufnahmen parallele Schnitte sind.

3. Verfahren nach Anspruch 1, **dadurch gekennzeichnet, dass** eine Vielzahl von Schnitten verarbeitet wird, um eine Beschreibung des dreidimensionalen Volumens zu ergeben.

4. Verfahren nach einem der vorherigen Ansprüche, **dadurch gekennzeichnet, dass** jedes Segment zweigeteilt wird.

5. Verfahren nach einem der vorherigen Ansprüche, **dadurch gekennzeichnet, dass** die Position jedes zweiten Punkts dem Anwender als Funktion der Position von zwei ersten angrenzenden Punkten vorgeschlagen wird.

6. Verfahren nach Anspruch 5, **dadurch gekennzeichnet, dass** die Position jedes zweiten Punkts als Funktion der Richtung der Senkrechten bezüglich der beiden angrenzenden ersten Punkte vorgeschlagen wird.

7. Verfahren nach einem der vorherigen Ansprüche, **dadurch gekennzeichnet, dass** die Segmente in Untersegmente unterteilt werden bis die sich aus einer gegebenen Unterteilung ergebende Änderung des Volumens vernachlässigbar ist.

8. Verfahren nach einem der vorherigen Ansprüche, **dadurch gekennzeichnet, dass** man sechs erste Basispunkte definiert.

9. Verfahren nach einem der vorherigen Ansprüche, **dadurch gekennzeichnet, dass** eine Berechnung der Verteilung der Dichte des Objekts im Raum erfolgt.

10. Verfahren nach einem der vorherigen Ansprüche, **dadurch gekennzeichnet, dass** man jeden Punkt der dreidimensionalen Formen modifizieren kann.

11. Verfahren nach einem der vorherigen Ansprüche, **dadurch gekennzeichnet, dass** die Punkte manuell definiert werden.

## Claims

1. Process for estimating and segmenting the volume of a three-dimensional object in medical imaging, an outline of the said object being known by means of a plurality of sectional snapshots, **characterized by** the following steps:
- a given number of base points is defined which constitute a first three-dimensional form defined by facets whose vertices are the base points,
- each facet of the first form being defined by three segments and each segment being common to two adjacent facets, the segments are divided by creating second-order points adapted to the outline of the object in such a way as to constitute a second three-dimensional form which is closer to the outline of the object than the first form, the creation of a second-order point entailing the creation of two new facets and of three new segments,
- each segment is iteratively divided into tailored sub-segments by defining third-order points adapted to the outline of the object in such a way as to constitute a third three-dimensional form which is closer to the outline of the object than the second form, the creation of a third-order point entailing the creation of two new facets and of three new segments,
- then the volume of the third three-dimensional form is calculated.

2. Process according to Claim 1, **characterized in that** the snapshots are taken as parallel sections.

3. Process according to Claim 1, **characterized in that** a plurality of snapshots is processed to provide a description of the three-dimensional volume.

4. Process according to any one of the preceding claims, **characterized in that** each segment is divided into two.

5. Process according to any one of the preceding claims, **characterized in that** the position of each second point is proposed to the operator as a function of the position of the two first adjacent points.

6. Process according to Claim 5, **characterized in that** the position of each second point is proposed as a function of the orientation of the normals at the two first adjacent points.

7. Process according to any one of the preceding claims, **characterized in that** the segments are divided into sub-segments until the change of volume resulting from a given division is negligible.

8. Process according to any one of the preceding claims, **characterized in that** six first base points are defined.

9. Process according to any one of the preceding claims, **characterized in that** a calculation of distribution of the density of the object in space is performed.

10. Process according to any one of the preceding claims, **characterized in that** any point of the three-dimensional forms can be modified.

11. Process according to any one of the preceding claims, **characterized in that** the points are defined manually.
